# EUROPEAN PATENT SPECIFICATION

(11) **EP 3 361 910 B1**
(45) Date of publication and mention of the grant of the patent: **27.05.2020**
(21) Application number: 16855843.5
(22) Date of filing: 22.08.2016
(51) Int. Cl.: A47C 27/04, A47C 17/80, A47C 19/04

(54) **EXTENSION MECHANISM FOR ADJUSTING A BED ARRANGEMENT AND BED ARRANGEMENT**
ERWEITERUNGSMECHANISMUS ZUM VERSTELLEN EINER BETTANORDNUNG UND BETTANORDNUNG
MÉCANISME D'EXTENSION POUR RÉGLER UN AGENCEMENT DE LIT, ET AGENCEMENT DE LIT

(30) Priority: 12.10.2015 SE 1551316
(43) Date of publication of application: 22.08.2018
(73) Proprietor: Scania CV AB, 151 87 Södertälje (SE); Berco Truck Components BV, 5480 AG Schijndel (NL)
(72) Inventor: GÖKTÜRK, Kagan, 123 33 Farsta (SE); STERKS, Gertjan, 5271 HS Sint-Michielsgestel (NL); BLES, Hein, 6574 AS Ubbergen (NL)
(74) Representative: Bjerkéns Patentbyrå KB (Stockholm)
(86) International application number: PCT/SE2016/050778
(87) International publication number: WO 2017/065667

(56) References cited:
- JP-A- 2013 167 074
- US-A- 318 381
- US-A- 378 397
- US-A- 420 187
- US-A- 420 187
- US-A1- 2010 071 136
- US-A1- 2010 071 136
- US-A1- 2010 325 810

## Description

### TECHNICAL FIELD

The invention relates to an extension mechanism for adjusting a bed arrangement between an expanded state and a contracted state according to the preamble of claim 1. The invention also relates to a variable-size bed arrangement. The invention also relates to a vehicle.

### BACKGROUND ART

Bed arrangements with variable size where the bed arrangement is adjustable between an expanded state and a contracted state by means of some kind of extension mechanism are known. Such variable-size bed arrangements are advantageous in trucks or lorry cabs where space may be limited. Such variable-size bed arrangement may function as a sleeping arrangement in the expanded state and a seating arrangement in the contracted state. Document US420187 discloses a bed with an extensible bedstead bottom consisting of two or more rows of lazy-tongs connections. SE532788C2 discloses a variable-size bed comprising a mattress core and a base, which base is adapted to support at least a portion of the mattress core. The mattress core and the base are changeable between an expanded state and a contracted state. The mattress core is a pocket-spring mattress core comprising a plurality of interconnected coil springs enclosed in spring covers. Springs that are located adjacent to one another are spaced apart by an interjacent separation distance then the mattress core is in the expanded state and placed closer together when the mattress core is in the contracted state. The base comprises two parts displaceable in relation to each other. The variable-size bed is thus extendable by means of an extension mechanism comprising interjacent separation of adjacent springs and displaceable base parts.

A problem with thus separating adjacent springs of the pocket-spring mattress is that the sleeping comfort is compromised due to a resulting variation in firmness occurring in the mattress and the space between the pocket springs. There may also be a problem when compressing the separated springs in that the stretched layer may be squeezed.

There is thus a need to further improve variable-sized bed arrangement and expansion mechanism of such a bed arrangement.

### OBJECTS OF THE INVENTION

An object of the present invention is to provide an extension mechanism for adjusting a bed arrangement between an expanded state and a contracted state which provides easy adjustment without compromising sleeping comfort.

An object of the present invention is to provide a variable-size bed arrangement adjustable between an expanded state and a contracted state which provides easy adjustment without compromising sleeping comfort.

### SUMMARY OF THE INVENTION

These and other objects, apparent from the following description, are achieved by an extension mechanism, a variable-size bed arrangement and a vehicle as set out in the appended independent claims. Preferred embodiments of the extension mechanism and the bed arrangement are defined in appended dependent claims.

Specifically an object of the invention is achieved by an extension mechanism for adjusting a bed arrangement between an expanded state and a contracted state. The extension mechanism comprises rows of interconnected spring members and rods linked to the spring members in a parallelogram configuration to provide a resilient mattress core portion.

Hereby easy adjustment of a bed arrangement is facilitated without compromising the sleeping comfort. Such an extension mechanism is according to an embodiment arranged to be a complement to a non-expandable pocket-spring mattress core comprising a plurality of interconnected coil springs enclosed in spring covers, the extension mechanism thus acting as the extendable portion of the mattress core. Such an extension mechanism could be arranged to be a complement to any suitable non-extendable mattress core portion such as any suitable resilient mattress core portion having any suitable spring configuration and/or layer configuration. Such an extension mechanism is according to an alternative embodiment arranged to provide substantially the whole mattress core of the bed arrangement, thus providing extension function of the mattress core and resilience for sleeping comfort. By applying the extension mechanism to a bed arrangement space saving of the bed arrangement is facilitated.

The adjustment of the bed arrangement between an expanded state and a contracted state is an adjustment of the width of the bed arrangement between an expanded state and a contracted state. The adjustment of the bed arrangement between an expanded state and a contracted state could according to an alternative embodiment be an adjustment of the length of the bed arrangement between an expanded state and a contracted state.

The extension mechanism may be one set of such parallelogram configurations or two or more such parallelogram configurations separated from each other.

According to the invention the rows of interconnected spring members and the rods linked to the spring members are pivotable relative to each other at said links to be substantially parallel in the contracted state and having an angle relative to each other in the expanded state. Hereby an efficient construction for facilitating extension and contraction of the extension mechanism is provided.

According to an embodiment of the extension mechanism the rows of interconnected spring members are mutually parallel and the rows of rods are mutually parallel in the expanded state as well as the contracted state. Hereby an efficient construction for facilitating extension and contraction of the extension mechanism is provided.

According to an embodiment of the extension mechanism the respective spring member comprises arc shaped and/or ring shaped parts arranged in said rows with the curved sides facing each other. Hereby a mattress core providing an equal comfort compared to a pocket spring mattress core is provided in an efficient way.

The extension mechanism can have any suitable shape with spring members in rows. The rows of spring members can be formed in one piece with ring shapes linked together.

According to an embodiment of the extension mechanism the rods are linked to the upper side and/or lower side of the arc shaped and/or ring shaped parts of the spring members. Hereby an efficient construction for facilitating extension and contraction of the extension mechanism is provided.

According to an embodiment of the extension mechanism the rows of interconnected spring members are configured to be at least part of the mattress core of the bed arrangement.

According to an embodiment of the extension mechanism the spring members are made of a polymeric material. Hereby a construction with relatively light weight is provided. Hereby a construction is provided which is relatively easy to manufacture.

Specifically an object of the invention is achieved by a variable-size bed arrangement comprising a mattress core and a base, which base is adapted to support at least a portion of the mattress core. The bed arrangement comprises an extension mechanism. The extension mechanism comprises rows of interconnected spring members and rods linked to the spring members in a parallelogram configuration to provide a resilient mattress core portion. With such an extension mechanism easy adjustment of the bed arrangement is facilitated without compromising the sleeping comfort.

According to an embodiment of the variable-size bed arrangement the extension mechanism is slidably connected to said base and slidably connected to a fastening member of the bed arrangement movable relative to said base. Hereby efficient operation of the extension mechanism is obtained.

The bed arrangement with the extension mechanism is applicable to any suitable location. The bed arrangement may be arranged in a vehicle such as a truck cabin. The bed arrangement may be arranged in other vehicles such as pickup trucks, vans, campers, trains and also be used as hospital bed, camping bed or the like.

According to an embodiment of the variable-size bed arrangement the rows of interconnected spring members and the rods linked to the spring members are pivotable relative to each other at said links to be substantially parallel in the contracted state and having an angle relative to each other in the expanded state. The rows of interconnected spring members are according to an aspect of the invention mutually parallel and the rows of rods are mutually parallel in the expanded state as well as the contracted state. According to an aspect of the invention the respective spring member comprises arc shaped and/or ring shaped parts arranged in said rows with the curved sides facing each other. According to an aspect of the invention the rows of interconnected spring members are configured to be at least part of the mattress core of the bed arrangement. According to an aspect of the invention the spring members are made of a polymeric material.

According to an embodiment the bed arrangement further comprises means for adjusting the cover layer comprising a spring arrangement connected to one end of the cover layer such that a spring load is applied to said cover layer by adjusting the bed arrangement to the expanded state. Hereby efficient adjustment of the cover layer between the contracted state and expanded state is obtained facilitating a space efficient construction of the bed arrangement both regarding height and width. Hereby no roll-up device is required in order to obtain the adjustment of the cover layer, hereby facilitating a space efficient construction of the bed arrangement.

According to an embodiment of the bed arrangement the spring arrangement comprises at least one spring member arranged to be compressed in the expanded state so as to provide said spring load to said cover layer. Hereby efficient adjustment of the cover layer between the contracted state and expanded state is obtained facilitating a space efficient construction of the bed arrangement.

According to an embodiment of the bed arrangement the spring arrangement comprises a bar element, said cover layer being arranged to act upon said bar element during expansion to said expanded state, wherein the bar element is arranged to act upon said at least one spring member to compress said spring member during expansion to said expanded state. Hereby efficient adjustment of the cover layer between the contracted state and expanded state is obtained facilitating a space efficient construction of the bed arrangement.

According to an embodiment of the bed arrangement said one end of the cover layer is connected to said bar element. Hereby efficient operation of the spring arrangement is obtained.

According to an embodiment of the bed arrangement said one end of the cover layer is connected to a run and arranged to slide against said bar element. Hereby efficient operation of the spring arrangement is obtained.

According to an embodiment of the bed arrangement said spring arrangement comprises a first spring member and a second spring member, said bar element being connected between the first and second spring members. Hereby efficient adjustment of the cover layer between the contracted state and expanded state is obtained with a space efficient construction of the bed arrangement.

Specifically an object of the invention is achieved by a vehicle comprising a bed arrangement according to the invention. The present invention provides an extension mechanism for adjusting a bed arrangement as defined in claim 1. Preferred features of the invention are set out in the dependent claims.

### BRIEF DESCRIPTION OF THE DRAWINGS

For a better understanding of the present invention reference is made to the following detailed description when read in conjunction with the accompanying drawings, wherein like reference characters refer to like parts throughout the several views, and in which:
Fig. 1 schematically illustrates a side view of a vehicle according to the present invention;
Fig. 2a schematically illustrates a perspective view of a variable-size bed arrangement according to an embodiment of the present invention in a contracted state;
Fig. 2b schematically illustrates a perspective view of the variable-size bed arrangement in fig. 2a in an expanded state;
Fig. 3a schematically illustrates a view from above of the bed arrangement in fig. 2a in the expanded state without cover layer;
Fig. 3b schematically illustrates a view from underneath of the bed arrangement in fig. 2a in the expanded state without cover layer;
Fig. 3c schematically illustrates a back view of the bed arrangement in fig. 2a;
Fig. 3d schematically illustrates a perspective view of the bed arrangement in fig. 2a in the expanded state without cover layer;
Fig. 4a schematically illustrates a side view of the bed arrangement in fig. 2a in the contracted state;
Fig. 4b schematically illustrates a side view of the bed arrangement in fig. 2a in the expanded state;
Fig. 5a schematically illustrates a cross sectional side view of the bed arrangement in fig. 2a in the contracted state;
Fig. 5b schematically illustrates a cross sectional side view of the bed arrangement in fig. 2a in the expanded state; and
Fig. 6a schematically illustrates a perspective view of an extension mechanism according to an embodiment of the present invention in a contracted state;
Fig. 6b schematically illustrates a plan view of the extension mechanism in fig. 6a in the contracted state;
Fig. 6c schematically illustrates a perspective view of the extension mechanism in fig. 6a in an expanded state;
Fig. 6d schematically illustrates a plan view of the extension mechanism in fig. 6a in the expanded state;
Fig. 7a schematically illustrates a perspective view of piece of padding layer according to an embodiment of the present invention in a contracted state;
Fig. 7b schematically illustrates a perspective view of the piece of padding layer in fig. 7a in the expanded state;
Fig. 7c schematically illustrates a plan view of a perforation of the piece of padding layer in fig. 7b in the expanded state;
Fig. 8a schematically illustrates a plan view of the piece of padding layer in fig. 7a in the contracted state;
Fig. 8b schematically illustrates a cross sectional side view of the piece of padding layer in fig. 8a
Fig. 8c schematically illustrates a plan view of the piece of padding layer in fig. 7a in the expanded state; and
Fig. 8d schematically illustrates a cross sectional side view of the piece of padding layer in fig. 8c.

### DETAILED DESCRIPTION

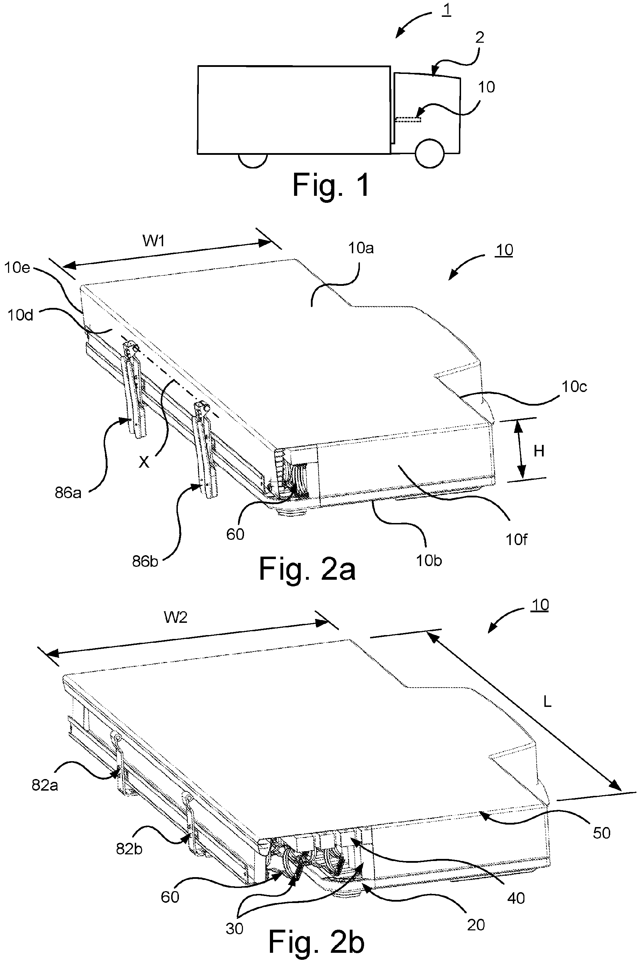

Fig. 1 schematically illustrates a side view of a vehicle 1 according to the present invention. The exemplified vehicle 1 is a heavy vehicle in the shape of a truck with a cab 2. The vehicle according to the present invention could be any suitable vehicle such as a lorry or a car. The vehicle comprises a variable-size bed arrangement 10 according to the present invention.

Fig. 2a and 2b schematically illustrates perspective views of a variable-size bed arrangement 10 according to the present invention in a contracted state and expanded state respectively.

The bed arrangement 10 is applicable to any suitable location. The bed arrangement 10 may be arranged in a vehicle such as a truck cabin. The bed arrangement 10 may be arranged in other vehicles such as pickup trucks, vans, campers, trains and also be used as hospital bed, camping bed or the like.

The bed arrangement 10 has an upper side 10a, an underside 10b, a front side 10c and a back side 10d. The bed arrangement 10 further has a first short side 10e and an opposite second short side 10f.

The bed arrangement 10 has a length L and a height H. The variable-size bed arrangement 10 has an adjustable width, the width being adjustable between a contracted state with a width W1 illustrated in fig. 2a and an expanded state with a width W2 illustrated in fig. 2b.

The bed arrangement 10 comprises a base 20 and a mattress core 30, which base 20 is adapted to support at least a portion of the mattress core 30. The base 20 functions as a bed carrier.

The bed arrangement 10 further comprises a padding layer 40 arranged on the upper side of the mattress core 30. The padding layer 40 is a piece of padding layer 40.

The bed arrangement 10 further comprises a cover layer 50 arranged to cover the upper side of the mattress core 30 and the padding layer 40. The padding layer 40 is provided in between the mattress core 30 and the cover layer 50.

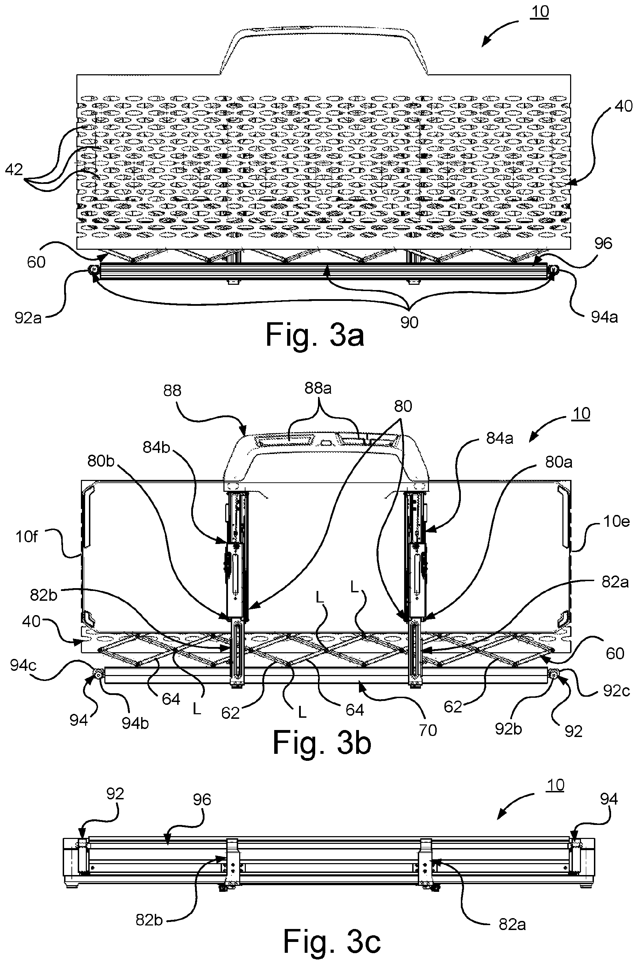

Fig. 3a-d schematically illustrates different views of the bed arrangement 10 in the expanded state without cover layer 50 exposing the piece of padding layer 40.

As can be seen in fig. 3b the base 20 has a substantially rectangular shape.

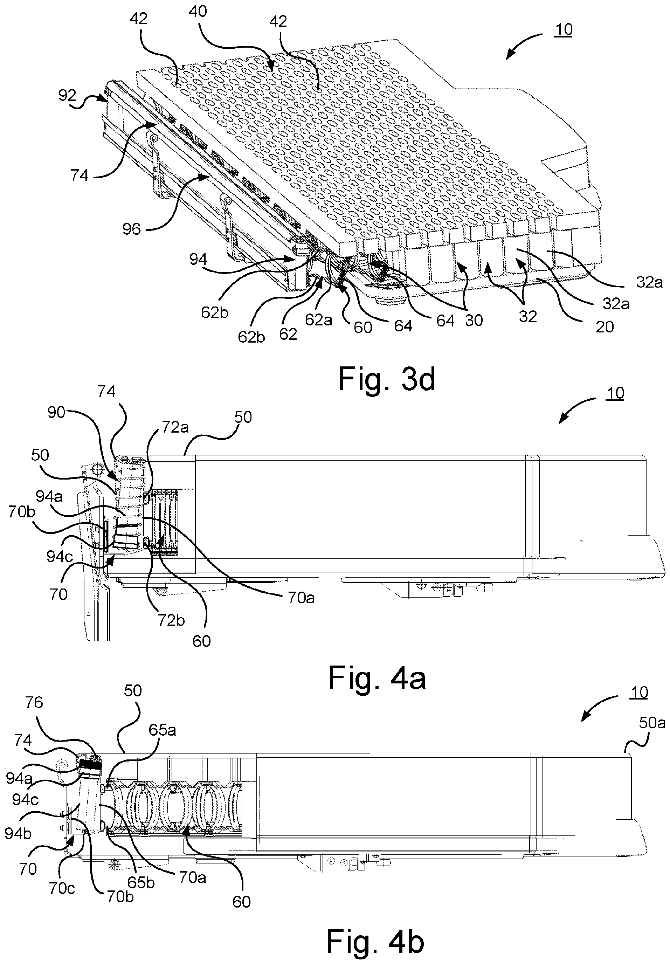

As can be seen in e.g. fig. 3d the mattress core 30 comprises a so called pocket spring mattress core 32. The pocket spring mattress core 32 comprises a plurality of interconnected coil springs 32a. The coil springs 32a are arranged in several strips each comprising two layer portions arranged so as to form spring covers for enclosing the coil springs.

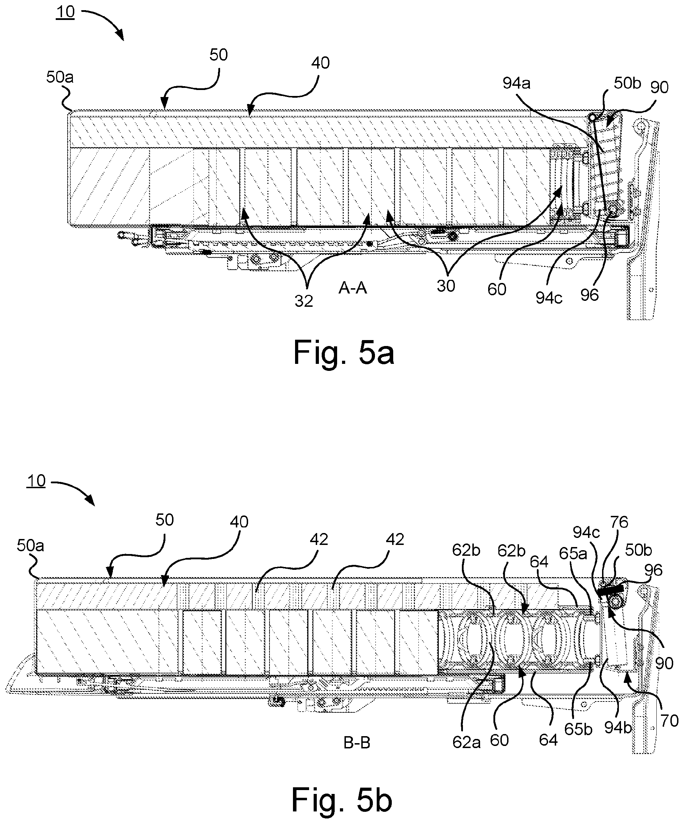

Fig. 4a and 4b schematically illustrates a side view and fig. 5a and 5b a cross sectional side view of the bed arrangement 10 in the contracted state and expanded state.

The bed arrangement 10 comprises an extension mechanism 60 for adjusting the bed arrangement 10 between an expanded state and a contracted state.

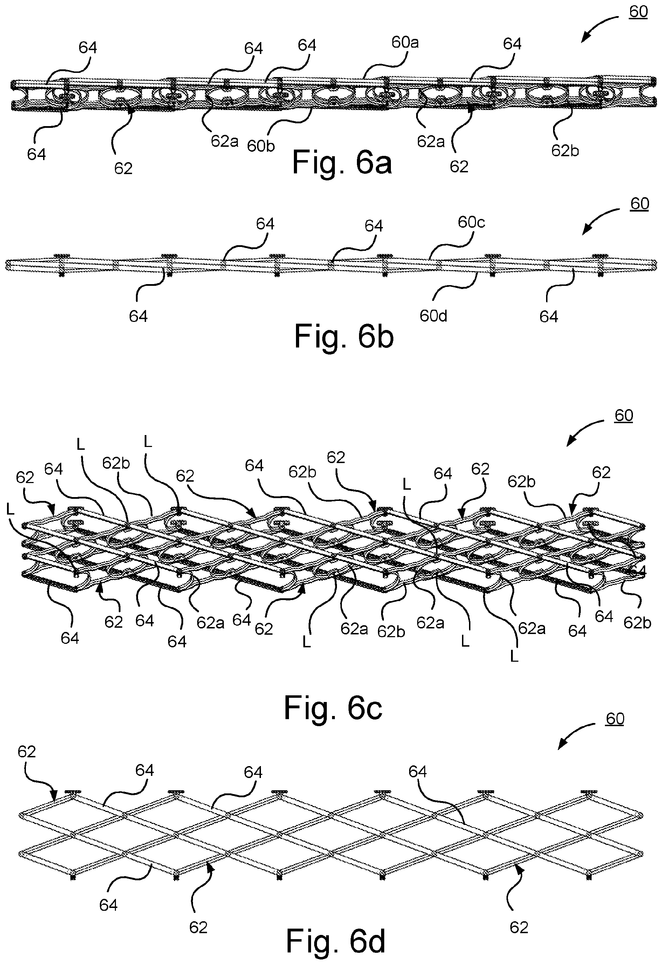

The extension mechanism 60 integrated in the bed arrangement 10 can be seen in fig. 2a-b, 3a-b, fig. 3d, fig. 4a-b and fig. 5a-b. The extension mechanism 60 is described in more detail below with reference to fig. 6a-d.

The mattress core 30 comprises the extension mechanism 60. The extension mechanism 60 is thus comprised in the mattress core 30.

The bed arrangement 10 comprises a groove element 70 configured to run along the back side 10d of the bed arrangement 10. The groove element 70 has a J-shaped profile with an inner leg portion 70a facing the extension mechanism, an outer leg portion 70b and a bottom portion 70c as illustrated in fig. 4b.

The bed arrangement 10 comprises a guide arrangement 80 for guiding the bed arrangement 10 and hence the extension mechanism 60 between the contracted state and expanded state. The guide arrangement 80 is arranged in connection to the underside 10b of the bed arrangement. The guide arrangement 80 comprises a guide member pair 80a 80b. The guide arrangement 80 comprises a first guide member 80a and a second guide member 80b, the first and second guide member 80a, 80b being arranged at a distance from each other and configured to run in the width direction of the bed arrangement 10. The guide arrangement 80 thus comprises a guide member pair 80a 80b.

The first guide member 80a comprises a first rear guide element 82a connected to the groove element 70 and a first front guide member 84a connected to the base 20.

The second guide member 80a comprises a second rear guide element 82b connected to the groove element 70 and a second front guide member 84b connected to the base 20.

The guide member pair 80a, 80b thus comprises a rear guide element pair 82a, 82b and a front guide element pair 84a, 84b.

The first rear guide element 82a and first front guide element 84a are movable relative to each other and correspondingly the second rear guide element 82b and second front guide element 84b are movable relative to each other.

The first rear guide element 82a and first front guide element 84a are slidably connected to each other and correspondingly the second rear guide element 82b and second front guide element 84b are slidably connected to each other.

The connection between the respective first and second guide elements 82a, 82b, 84a, 84b is according to an embodiment a rail engagement, the first and second guide elements 82a, 82b, 84a, 84b comprising rails for slidable engagement.

The first and second front guide elements 82a, 82b are connected to the outside of the outer leg portion 70b of the groove element 70. The first and second front guide elements 82a, 82b are thus arranged to run from the underside 10b of the bed arrangement 10 to the back side of the bed arrangement 10 as can be seen e.g. in fig. 2b.

The first and second front guide elements 82a, 82b are connected fastening elements 86a, 86b for fastening the bed arrangement to e.g. a wall. The first and second front guide elements 82a, 82b are according to an embodiment pivotably connected to the fastening elements 86a, 86b for pivoting the bed arrangement about an axis X running in the length direction of the bed arrangement 10 for raising and lowering the bed arrangement between a raised position for non-use and a lowered position for use.

The guide arrangement 80 comprises an actuator member 88 for manually actuating the bed arrangement 10 between the expanded state and the contracted state. The actuator member 88 is arranged at the front side 10c of the bed arrangement 10. The actuator member 88 is connected to the first and second guide members 80a, 80b. The actuator member 88 comprises actuator elements 88a for unlocking the first and second rear guide elements 82a, 82b from the first and second front guide elements 84a, 84b for allowing sliding for expansion/contraction of the bed arrangement 10. The guide arrangement 80 thus comprises a locking arrangement for locking the bed arrangement at least in the expanded state and the contracted state, the locking arrangement being operable by means of the actuator elements 88a of the actuator member 88. The locking arrangement is according to an embodiment arranged to lock the bed arrangement in in the expanded state and the contracted state and positions there between.

Fig. 6a-b schematically illustrates a perspective view and a plan view of an extension mechanism 60 according to an embodiment of the present invention in a contracted state, and fig. 6c-d a perspective view and a plan view of the extension mechanism 60 in the expanded state. See also fig. 5b illustrating the extension mechanism 60 integrated in the bed arrangement 10.

The extension mechanism 60 is intended for adjusting the bed arrangement 10 between the expanded state and the contracted state.

The extension mechanism 60 has an upper side 60a and an underside 60b. When the extension mechanism 60 is arranged in the bed arrangement 10, the upper side 60a is arranged to face the padding layer 40 and the underside is arranged to face the base 20 of the bed arrangement 10. The extension mechanism 60 further has a front side 60c and a back side 60d opposite to the front side 60c. When the extension mechanism 60 is arranged in the bed arrangement 10, the front side 60c of the extension mechanism 60 is arranged to face in substantially the same direction as the front side 10c of the bed arrangement 10 and the back side 60d is arranged to face in the same direction and towards the back side 10d of the bed arrangement.

The extension mechanism 60 comprises parallel rows of interconnected spring members 62 and parallel rods 64 linked L to the rows of interconnected spring members at links L connecting each spring member 62 with a respective rod 64 in a lazy tong configuration. The rows of interconnected spring members 62 and the rods 64 linked to the spring members 62 cross each other at an angle relative to each other. The rows of interconnected spring members 62 and the rods 64 are also pivotable relative to each other at said links to be substantially parallel in the contracted state and having an angle relative to each other in the expanded state.

The respective spring member 62 comprises arc shaped and/or ring shaped parts 62a arranged in said rows, wherein each respective arc and/or ring shaped part 62a is connected to an upper and lower connection part 62b. The respective connection parts 62b extend in a direction essentially parallel to the radial direction of the arc and/or ring shaped parts 62a with the curved sides facing each other. Thus, the respective spring member form an essentially vertically arranged arc or ring standing on its curved side. The upper and lower connection parts 62b connect two arc and/or ring shaped parts 62a facing each other with their curved sides forming an anvil profile. The upper and lower connection parts 62b have a wavy profile. The spring members 62 comprising arc shaped parts 62b and upper and lower connection parts 62b may also in one embodiment be connected in rows such that ring shapes are formed by the arc shaped parts 62b of two connected spring members 62. The spring members 62 are according to an embodiment connected in rows by means of snap fit joints.

The rods 64 are linked to the upper side and lower side of the arc shaped parts 62a of the spring members 62.

The spring members 62 have spring action similar to the spring action of the coil springs 32a of the pocket spring mattress core 32. The extension mechanism 60 is configured to provide a similar spring action as the pocket spring mattress core 32. The extension mechanism 60 is configured to provide a similar sleeping comfort as the non-extendable spring mattress core 32. The extension mechanism 60 and the non-extendable spring mattress core 32 provides an even pressure distribution over the entire sleeping area.

The extension mechanism 60 is slidably connected to the base 20. As can be seen in fig. 5b, the extension mechanism 60 is connected to the base 20 via fastening members at the underside 60b of the extension mechanism 60. The extension mechanism 60 is connected to the base 20 via links L at the underside 60b of the extension mechanism 60, the links L being links arranged in connection to the front side of 60c of the extension mechanism 60. The extension mechanism 60 is connected to the base 20 via fastening members on the underside 60b arranged in connection to the front side 60c of the extension mechanism 60. The extension mechanism 60 is according to an embodiment slidably connected to grooves in connection to the base 20. The extension mechanism 60 is arranged to slide in the longitudinal extension of the base 20 during adjustment of the bed arrangement 10 between the contracted state and the expanded state of the bed arrangement 10.

The extension mechanism 60 is slidably connected to the groove element 70. The extension mechanism 60 is arranged to slide in the longitudinal extension of the groove element 70 during adjustment of the bed arrangement 10 between the contracted state and the expanded state of the bed arrangement 10. The extension mechanism 60 is connected to the groove element 70 via links L of the extension mechanism 60, the links L being links arranged in connection to the back side of 60d of the extension mechanism 60.

The extension mechanism 60 is slidably connected to the inner leg portion 70a of the groove element 70. The inner leg portion 70a of the groove element 70 comprises an upper track 72a and a lower track 72b, see e.g. fig. 4a, the tracks 72a, 72b running in the length direction of the bed arrangement and hence the longitudinal direction of the groove element 70 along the inner grove element 70a on the side facing the extension mechanism 60. The upper track 72a and lower track 72b constitute a fastening member 72a, 72b. The extension mechanism 60 is thus slidably connected to a fastening member 72a, 72b of the bed arrangement 10 movable relative to the base 20.

The extension mechanism 60 is thus slidably connected to the base 20 and slidably connected to the fastening member 72a, 72b of the bed arrangement 10 movable relative to said base 20. The extension mechanism 60 is slidably connected to the base 20 in connection to the front side 60c of the extension mechanism 60 and slidably connected to the fastening member 72a, 72b of the groove 70 in connection the rear side 60d of the extension mechanism 60, wherein the extension mechanism 60 is adjustable between the contracted state and the extended state by moving the groove element 70 relative to the base 20 in the width direction of the bed arrangement 10.

The extension mechanism 60 is slidably connected to the tracks 72a, 72b via connection elements 65a, 65b. The connection elements 65a, 65b comprises upper connection elements 65a for slidable connection to the upper track 72a and lower connection elements 65b for slidable connection to the lower track 72b. The connection elements 65a, 65b are attached to spring members 62 adjacent to the groove element 70. The upper connection elements 65a are connected to the upper side of the arc shaped parts 62b of the spring members 62 and the lower connection elements 65b are connected to the lower side of the arc shaped parts 62b of the spring members 62 adjacent to the groove element 70.

The connection element 65a, 65b are arranged to slide in the tracks 72a, 72b when the extension mechanism 60 is moved between the contracted state and the expanded state.

The bed arrangement 10 comprises means for adjusting the cover layer 50. The cover layer 50 has a front end 50a arranged in connection to the front side 10c of bed arrangement 10 and a rear end 50b opposite to the front end 50a. The rear end of the cover layer is arranged in connection to the rear end 10d of the bed arrangement.

The means for adjusting the cover layer 50 comprises a spring arrangement 90 connected to rear end 50b of the cover layer 50 such that a spring load is applied to said cover layer 50 by adjusting the bed arrangement to the expanded state.

The spring arrangement 90 comprises a first spring member 92 and a second spring member 94, said spring members being arranged to be compressed in the expanded state.

The first spring member 92 comprises a first coil spring 92a, a first cylinder 92b and a first sleeve member 92c. The first coil spring 92a and the sleeve member 92c are arranged around the first cylinder 92b. The first sleeve member 92c is movable along the first cylinder 92b and guided by the cylinder 92b. The first sleeve member 92c is arranged to act upon the first coil spring 92a. The first sleeve member 92c is movable between a first position corresponding to the contracted position of the bed arrangement 10 and a substantially non-compressed state of the coil spring, and a second position corresponding to the expanded state of the bed arrangement 10 and thus a compressed state of the coil spring 92a.

The second spring member 94 comprises a second coil spring 94a, a second cylinder 94b and a second sleeve member 94c. The second coil spring 94a and the sleeve member 94c is arranged around the second cylinder 94b. The second sleeve member 94c is movable along the second cylinder 94b and guided by the cylinder 94b. The second sleeve member 94c is arranged to act upon the second coil spring 94a. The second sleeve member 94c is movable between a first position corresponding to the contracted position of the bed arrangement 10 and a substantially non-compressed state of the coil spring, and a second position corresponding to the expanded state of the bed arrangement 10 and thus a compressed state of the coil spring 94a.

The spring arrangement 90 comprises a bar element 96. The bar 96 element is connected between the first and second spring members 92, 94.

The cover layer 50 is arranged to act upon said bar element 96 during expansion to said expanded state, wherein the bar element 96 is arranged to act upon the first and second spring members 92, 94 to compress said spring members, i.e. compress the coil springs 92a, 94a, during expansion to the expanded state.

The rear end 50b of the cover layer 50 is connected to the bar element 96.

The inner leg portion 70a of the groove element 70 extends in the upper portion horizontally to a support portion 74 for supporting the rear portion of the cover layer 50. The support portion 74 has a curve profile.

The rear end 50b of the cover layer 50 is according to an embodiment connected to a run 76, wherein an end portion of the cover layer is arranged to slide against the bar element 96. The cover layer 50 is thus connected to the bar element 96 via the run 76. The rear end 50b of the cover layer 50 is thus according to this embodiment attached to the run 76. The run 76 could be any suitable element for attaching the cover layer 50, i.e. the rear end 50b of the cover layer.

According to an alternative embodiment not shown the rear end 50b of the cover layer 50 could be directly attached to the bar element 96. In such an embodiment in which the rear end 50b of the cover layer 50 is attached to the bar element 96 the cover layer 50 may act upon the bar element 96 so as to move the bar element. Alternatively the bar element 96 may be configured as a roll-up device, wherein the cover layer 50 is arranged to act upon the bar element and to be partly rolled up by means of the bar element 96.

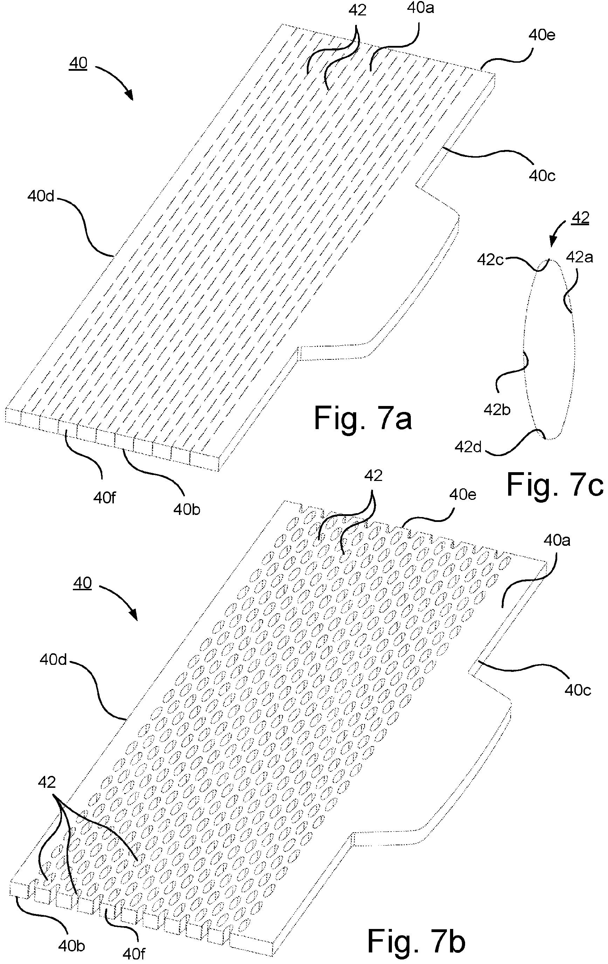

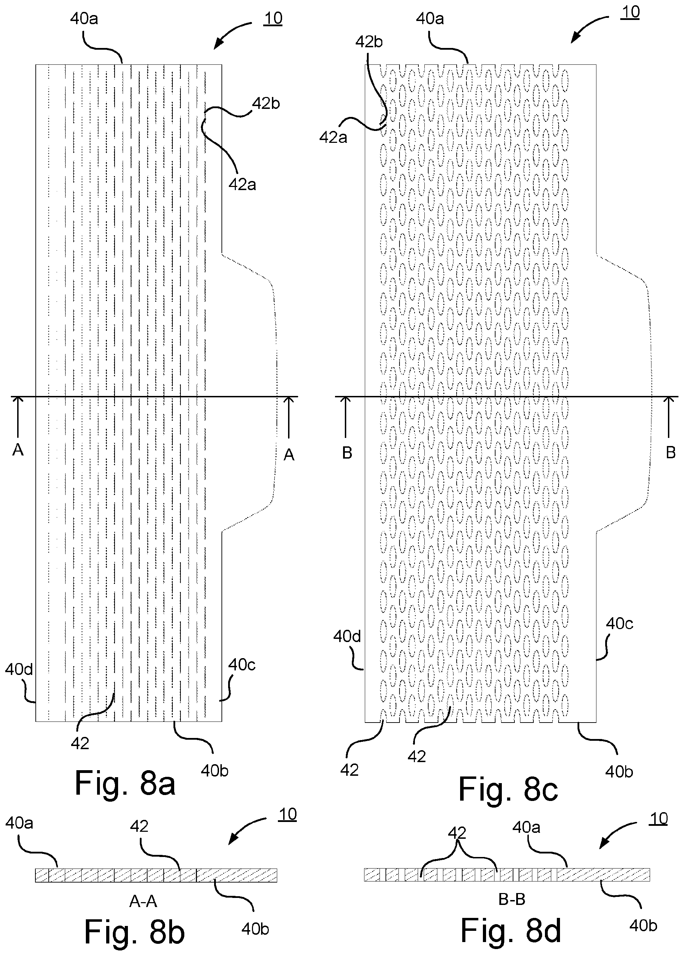

Fig. 7a-b and fig. 8a-d schematically illustrates different views of the piece of padding layer 40.

The piece of padding layer 40 has an upper side 40a, an underside 40b, a front side 40c and a back side 40d. The padding layer 40 further has a first short side 40e and an opposite second short side 40f.

The piece of padding layer 40 comprises perforations 42 distributed over a major portion of the padding layer 40. The perforations 42 are distributed over the padding layer 40 so as to allow said piece of padding layer to expand its total surface cover in the expanded state.

The perforations 42 have an elongated shape. The elongated perforations 42 are extending in the length direction of the bed arrangement 10. The elongated perforations 42 are distributed in rows where an adjacent row of elongated perforations 42 are displaced such that the respective elongated perforation in that row is located such that an imaginary line through the respective elongated perforation perpendicular to its extension runs between two adjacent elongated perforations 42 in adjacent rows.

The elongated shaped perforations 42 have according to this embodiment the shape of two arcs with their respective ends connected, the curvature of the arcs decreasing in the expanded state.

Fig. 7c schematically illustrates an elongated perforation 42 in the expanded state. The elongated perforation 42 has a first long side 42a, a second long side 42b facing the first long side 42a, a first short side 42c and a second short side 42d facing the first short side 42c. The respective long side 42a, 42b has a curved shape, according to a variant an arced shape, at least in expanded states. The respective long side 42a, 42b constitute inner walls of the elongated perforation 42. The first long side 42a and the second long side 42b are configured to move away from each other when the bed arrangement 10 and hence the padding layer 40 is expanded from the contracted state to the expanded state. The first long side 42a and the second long side 42b are configured to move against each other when the bed arrangement 10 and hence the padding layer 40 is contracted from the expanded state to the contracted state.

The first long side 42a and the second long side 42b are according to an embodiment configured to at least partly abut each other in the contracted state.

The elongated shaped perforations 42 constitute through holes at least in the expanded state.

The elongated shaped perforations 42 have an oval shape.

The padding layer 40 comprises a foam material. The foam material is according to an embodiment foam rubber.

## Claims

1. An extension mechanism (60) for adjusting a bed arrangement (10) between an expanded state and a contracted state, said extension mechanism (60) comprises parallel rows of interconnected spring members (62) and parallel rods (64) linked to the rows of interconnected spring members at links (L) in a parallelogram configuration so that the rows of interconnected spring members (62) are mutually parallel and the rows of rods (64) are mutually parallel in the expanded state to provide a resilient mattress core portion **characterized in that** the respective spring member (62) comprises arc shaped parts (62a) arranged in said rows with the curved sides facing each other and upper and lower connection parts (62b) connecting two arc shaped parts (62a) forming an anvil profile, and wherein the rods (64) are linked to the upper side and lower side of the arc shaped parts (62a) of the spring members (62) at said links (L) and whereby the rows of interconnected spring members (62) are mutually parallel and the rows of rods (64) are mutually parallel also in the contracted state and wherein the rows of interconnected spring members (62) and the rods (64) linked to the spring members (62) are pivotable relative to each other at said links (L) to be substantially parallel in the contracted state and having an angle relative to each other in the expanded state.

2. An extension mechanism according to claim 1, wherein the rows of interconnected spring members (62) are configured to be at least part of a mattress core (30) of the bed arrangement (10).

3. An extension mechanism according to claim 1 or 2, wherein said spring members (62) are made of a polymeric material.

4. A variable-size bed arrangement (10) comprising a mattress core (30) and a base (20), which base (20) is adapted to support at least a portion of the mattress core (30), comprising an extension mechanism (60) according to any of claims 1-3.

5. A variable-size bed arrangement according to claim 4, wherein said extension mechanism (60) is slidably connected to said base (20) and slidably connected to a fastening member (72a, 72b) of said bed arrangement (10) movable relative to said base (20).

6. A vehicle (1) comprising a bed arrangement (10) according to claim 4 or 5.

## Patentansprüche

1. Erweiterungsmechanismus (60) zum Verstellen einer Bettanordnung (10) zwischen einem expandierten Zustand und einem zusammengezogenen Zustand, wobei der Erweiterungsmechanismus (60) parallele Reihen miteinander verbundener Federelemente (62) und parallele Stäbe (64), die mit den Reihen miteinander verbundener Federelemente an Verbindungsstellen (L) in einer Parallelogrammausgestaltung verbunden sind, sodass in einem expandierten Zustand die Reihen miteinander verbundener Federelemente (62) parallel zueinander und die Reihen von Stäben (64) parallel zueinander sind, um einen widerstandsfähigen Matratzenkernabschnitt bereitzustellen, **dadurch gekennzeichnet, dass** das jeweilige Federelement (62) bogenförmige Teile (62a), die mit den runden Seiten einander zugewandt in den Reihen angeordnet sind, und obere und untere Verbindungsteile (62b), die zwei bogenförmige Teile (62a) verbinden und ein Ambossprofil bilden, umfasst, und wobei die Stäbe (64) mit der oberen Seite und der unteren Seite der bogenförmigen Teile (62a) der Federelemente (62) an den Verbindungsstellen (L) verbunden sind und wobei auch in dem zusammengezogenen Zustand die Reihen miteinander verbundener Federelemente (62) parallel zueinander sind und die Reihen von Stäben (64) parallel zueinander sind, und wobei die Reihen miteinander verbundener Federelemente (62) und die mit den Federelementen (62) verbundenen Stäbe (64) an den Verbindungsstellen (L) relativ zueinander schwenkbar sind, um in dem zusammengezogenen Zustand im Wesentlichen parallel zu sein und in dem expandierten Zustand relativ zueinander einen Winkel aufzuweisen.

2. Erweiterungsmechanismus nach Anspruch 1, wobei die Reihen miteinander verbundener Federelemente (62) dazu ausgestaltet sind, mindestens Teil eines Matratzenkerns (30) der Bettanordnung (10) zu sein.

3. Erweiterungsmechanismus nach Anspruch 1 oder 2, wobei die Federelemente (62) aus einem polymeren Material gefertigt sind.

4. Bettanordnung (10) variabler Größe umfassend einen Matratzenkern (30) und eine Rost (20), wobei der Rost (20) dazu angeordnet ist, mindestens einen Abschnitt des Matratzenkerns (30) zu stützen, umfassend einen Erweiterungsmechanismus (60) nach einem der Ansprüche 1-3.

5. Bettanordnung variabler Größe nach Anspruch 4, wobei der Erweiterungsmechanismus (60) verschiebbar mit dem Rost (20) verbunden ist und verschiebbar mit einem Befestigungselement (72a, 72b) der Bettanordnung (10) verbunden ist, das relativ zu dem Rost (20) bewegbar ist.

6. Fahrzeug (1), umfassend eine Bettanordnung (10) nach Anspruch 4 oder 5.

## Revendications

1. Mécanisme d'extension (60) pour ajuster un agencement de lit (10) entre un état déployé et un état contracté, ledit mécanisme d'extension (60) comprend des rangées parallèles d'éléments formant ressort interconnectés (62) et de tiges parallèles (64) liées aux rangées d'éléments formant ressorts interconnectés au niveau de liaisons (L) dans une configuration en parallélogramme de sorte que les rangées d'éléments formant ressort interconnectés (62) sont mutuellement parallèles et les rangées de tiges (64) sont mutuellement parallèles dans l'état déployé pour fournir une partie d'âme de matelas élastique, caractérisé en en ce que l'élément formant ressort respectif (62) comprend des parties en forme d'arc (62a) agencées dans lesdites rangées avec les côtés incurvés se faisant face mutuellement et des parties de connexion supérieure et inférieure (62b) reliant deux parties en forme d'arc (62a) en formant un profil d'enclume, et dans lequel les tiges (64) sont liées au côté supérieur et au côté inférieur des parties en forme d'arc (62a) des éléments formant ressort (62) au niveau desdites liaisons (L) et de telle sorte que les rangées d'éléments formant ressort interconnectés (62) sont mutuellement parallèles et les rangées de tiges (64) sont également mutuellement parallèles dans l'état contracté, et dans lequel les rangées d'éléments formant ressort interconnectés (62) et les tiges (64) liées aux éléments formant ressort (62) peuvent pivoter les unes par rapport aux autres au niveau desdites liaisons (L) pour être sensiblement parallèles dans l'état contracté et avoir un angle les unes par rapport aux autres dans l'état déployé.

2. Mécanisme d'extension selon la revendication 1, dans lequel les rangées d'éléments formant ressort interconnectés (62) sont configurées pour faire au moins partie d'une âme de matelas (30) de l'agencement de lit (10).

3. Mécanisme d'extension selon la revendication 1 ou 2, dans lequel lesdits éléments formant ressort (62) sont constitués d'un matériau polymère.

4. Agencement de lit de taille variable (10) comprenant une âme de matelas (30) et une base (20), laquelle base (20) est adaptée pour supporter au moins une partie de l'âme de matelas (30), comprenant un mécanisme d'extension (60) selon l'une quelconque des revendications 1 à 3.

5. Agencement de lit de taille variable selon la revendication 4, dans lequel ledit mécanisme d'extension (60) est relié de manière coulissante à ladite base (20) et relié de manière coulissante à un élément de fixation (72a, 72b) dudit agencement de lit (10) mobile par rapport à ladite base (20).

6. Véhicule (1) comprenant un agencement de lit (10) selon la revendication 4 ou 5.
